# EUROPEAN PATENT SPECIFICATION

(11) **EP 2 373 884 B1**
(45) Date of publication and mention of the grant of the patent: **08.01.2014**
(21) Application number: 09781645.8
(22) Date of filing: 07.08.2009
(51) Int. Cl.: F03D 5/06

(54) **ENERGY GENERATION SYSTEM WITH SELF OPENING AND CLOSING OF SAILS**
ENERGIEERZEUGUNGSSYSTEM MIT SELBSTÖFFNENDEN UND SCHLIESSENDEN SEGELN
SYSTÈME DE GÉNÉRATION D'ÉNERGIE À OUVERTURE ET FERMETURE AUTOMATIQUES DE VOILES

(30) Priority: 08.08.2008 EP 08425554; 26.01.2009 EP 09151327; 25.02.2009 EP 09153560
(43) Date of publication of application: 12.10.2011
(73) Proprietor: ZanettiStudios S.r.l., 20122 Milano (IT)
(72) Inventor: ZANETTI, Giancarlo, I-20122 Milano (IT); ANCONA, Gianfranco, Montignoso (MS) (IT)
(74) Representative: Pezzoli, Ennio
(86) International application number: PCT/EP2009/060311
(87) International publication number: WO 2010/015720

(56) References cited:
- WO-A1-2004/044418
- WO-A1-2007/101404
- WO-A2-2008/034421
- US-A- 4 124 182

## Description

The solution according to embodiments of the present invention generally relates to the field of the generation of energy. More specifically, this solution relates to the generation of energy from a fluid flow.

Different types of energy generation systems (or simply generators) are known in the art for generating energy (for example, of the electrical type) through the transformation of another type of energy; with reference in particular to the generation of energy from renewable energy sources, generators that exploit a fluid flow (for example, the wind) have attained an increasing attention in the last years.

These (eolic) generators are commonly based on turbines (at horizontal axis), which are mounted atop vertical towers. Alternatively, generators based on parachutes have been proposed - for example, as described in USUS-A-3,887,817, US-A-4124,182, US-A-6,555,931, WO-A-2004/044418, and WO-A-20087034421 (the entire disclosures of which are herein incorporated by reference).

Generally, these generators are based on a parachute (or a similar element) that can be switched between a closed condition and an open condition (in which it is carried away by the wind or the water); a balloon may also be associated with the parachute, so as to maintain it lifted. The parachute and the balloon are connected to an energy converter at ground through a connection cable. The parachute is alternatively opened and closed. When the parachute is open, it is carried away from the converter by the wind (so as to generate the desired electrical energy); the parachute is then closed, and returned towards the converter (by exploiting a small fraction of the generated electrical energy).

It is also possible to provide a pair of twin sections (each one including a parachute and a balloon), which are connected to each other by a single connection cable passing through an energy converter of the reciprocating type. In this case, the two parachutes are alternatively opened and closed. When a parachute is open, it is carried away from the converter by the wind (so as to generate the electrical energy); at the same time, it returns the other parachute towards the converter (without any waste of the generated electrical energy).

The above-described generators have a low environmental impact, and they may be installed practically everywhere; moreover, these generators are simple, reliable and easy to maintain (and then very cost effective). Notwithstanding, the generators based on the parachutes provides a very high yield. Indeed, in this case it is possible to exploit the wind at a relatively high height from the ground. As it is known, the speed of the wind generally increases moving away from the ground; for example, at 800m above the ground the wind has an average speed of 6-10 m/s for 5,000-7,000 hours a year (against an average speed of 4-5 m/s for 2,000-4,000 hours a year at 80m above the ground). Since the power of the wind (which is transformed into electrical energy by the converter) depends on the third power of its speed, it follows that any (even small) increase of the speed of the wind moving away from the ground involves a very high increase of its power.

However, a problem of the above-mentioned generators is the switching of the parachutes between their opening and the closing conditions. Indeed, these operations require a relatively high energy, since at least one of them (for opening or closing the parachutes) has to be performed in opposition to the wind.

For this purpose, it is possible to add driving cables (extending from the converter to each parachute), which are used to drive the opening and the closing of the parachute from ground. A drawback of the driving cables is their complexity (because of the need of transmitting a high force at a high distance); moreover, the driving cables are prone to malfunctioning - for example, because they may twist with the connection cable.

Alternatively, it is possible to mount a motor on board of each parachute. However, the motor must be relatively powerful, and then heavy (to provide the energy required to open and close the parachute). Therefore, the motor cannot be supplied locally neither by renewable energy generators - for example, solar panels (since they are unable to provide the required energy) nor by batteries (since their endurance is too low for practical applications). Conversely, if the motor is supplied remotely from the ground, a corresponding electrical cable extending from the converter to the parachute is required; this electrical cable is very dangerous - for example, in case of spikes or breaks thereof.

An additional problem of the generators based on two sections is the high risk of twist of the corresponding portions of the connection cable that extends from the converter (with a consequent stopping of their operation). When this happens, it is necessary to lower the parachutes to ground for disentangle the portions of the connection cable. However, this operation is very complex and time consuming; moreover, the twist of the portions of the connection cable may bring about damages to the generator.

In its general terms, the solution according to embodiments of the present invention is based on the idea of exploiting the fluid flow itself for the switching.

Particularly, different aspects of the solution according to embodiments of the invention are set out in the independent claims. Advantageous features of the same solution are set out in the dependent claims.

More specifically, an aspect of the solution according to an embodiment of the invention proposes an energy generation system for generating energy from a fluid flow. The system includes energy conversion means. The system further includes sail means, which is switchable between an active condition (for being carried away from the energy conversion means by the fluid flow) and a passive condition (for minimizing said carrying away). Connection means is provided for connecting the sail means to the energy conversion means; the energy conversion means generates said energy when the sail means in the active condition is carried away. Return means is instead used for returning the sail means in the passive condition towards the energy conversion means. The system then includes switching means for switching the sail means to the passive condition and to the active condition in response to a maximum distance and to a minimum distance thereof, respectively, from the energy conversion means. In the solution according to an embodiment of the invention, the sail means includes a pair of sail modules that are slidable along the connection means; each sail module is individually switchable between the active condition and the passive condition. The switching means then includes stopping means for each sail module; the stopping means is adapted to stop the sliding of the corresponding sail module in the active condition when carried away, thereby causing the switching thereof to the passive condition. Passive locking means is also provided for each sail module; the passive locking means is adapted to lock the corresponding stopped sail module in the passive condition. The switching means further includes coupling means for sliding each sail module locked in the passive condition in opposition to the fluid flow to a standing position along the connection means by the other sail module in the active condition when carried away. Active locking means is also provided for each sail module; the active locking means is adapted to lock the corresponding sail module in the standing position, thereby causing the switching thereof to the active condition after the unlocking from the passive condition.

Another aspect of the solution according to an embodiment of the invention proposes a corresponding method (with the same advantageous features recited in the dependent claims for the system that apply *mutatis mutandi* to the method).

A further aspect of the solution according to an embodiment of the invention. proposes a computer program for performing this method.

A still further aspect of the solution the solution according to an embodiment of the invention proposes a corresponding computer program product.

The solution according to embodiments of the invention, as well as further features and the advantages thereof, will be best understood with reference to the following detailed description, given purely by way of a non-restrictive indication, to be read in conjunction with the accompanying drawings (wherein corresponding elements are denoted with equal or similar references and their explanation is not repeated for the sake of brevity). In this respect, it is expressly intended that the figures are not necessary drawn to scale (with some details that may be exaggerated and/or simplified) and that, unless otherwise indicated, they are merely used to conceptually illustrate the structures and procedures described herein. Particularly:
FIG.1A-FIG.1D illustrate operation of an energy generation system wherein the solution according to an embodiment of the invention can be applied,
FIG.2A-FIG.2I illustrate an example of operation of the solution according to an embodiment of the invention,
FIG.3A-FIG.3E shows an exemplary implementation of the solution according to an embodiment of the invention,
FIG.4 is a schematic representation of a particular of the energy generation system according to an embodiment of the invention,
FIG.5A-FIG.5D illustrate operation of another energy generation system wherein the solution according to an embodiment of the invention can be used, and
FIG.6A-FIG.6D illustrate operation of an energy generation system according to an embodiment of the invention.

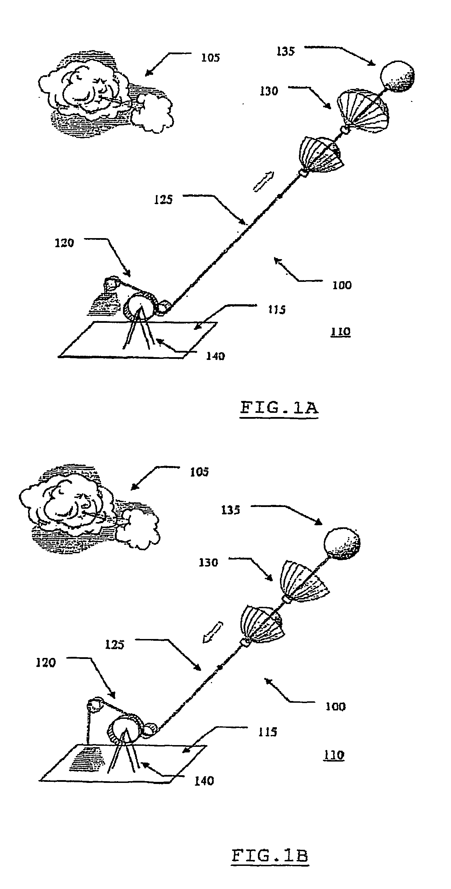

With reference in particular to FIG.1A-FIG.1D, there is illustrated operation of an energy generation system, or generator, 100 wherein the solution according to an embodiment of the invention can be applied. The generator 100 is used to generate energy (for example, of the electrical type) from the wind; the wind (pictorially represented at the reference 105) consists of a flow of air, which is substantially parallel to ground 110 (from the left to the right in the figure).

For this purpose, the generator 100 includes a base 115, which is installed on the ground 110. An energy converter 120 is mounted on the base 115. A connection cable 125 connects a parachute complex 130 (including a pair of parachutes) to the power converter 120; the cable 120 has a length (for example, 1.000-1.200m) allowing the parachute complex 130 to reach a desired height above the ground 110 (for example, 700-900m), and it is dimensioned so as to sustain the applied forces (for example, being made of 12 twisted ropes in Dynema SK75, with thermic treatment and polyurethane coating). A balloon complex 135 (for example, including a pair of aerostatic balloons) is associated with the parachute complex 130, so as to maintain it lifted from the ground 110 even in the absence of the wind 105. A controller 140 is arranged in the base 115 for controlling operation of the whole generator 100; particularly, the controller 140 monitors an extension of the cable 125 from the converter 120, so as to measure a distance of the sail complex 130 from it. For example, the controller 140 is based on a microprocessor - with a control unit, a RAM being used as a working memory by the control unit, a flash E²PROM being used to store information to be preserved even when a power supply is off (particularly, a control program of the controller 140), a keypad, and a display.

In operation, starting from FIG.1A, when the parachute complex 130 is open (for example, with its upper parachute) the wind 105 carries the parachute complex 130 away from the converter 120 (towards the right in the example at issue). In this phase, the cable 125 is extracted from the converter 120 so as to accumulate energy (schematically represented with the lifting of a weight from the ground 110 in the figure); for example, the energy may be accumulated by unwinding the cable 125 from a rotor of an electrical generator (so as to apply a corresponding torque).

Considering now FIG.1B, when the parachute complex 130 reaches a maximum distance from the converter 120 (for example, 800-1.000m) it is closed, so as to minimize its carrying away by the wind 105. The energy that was accumulated in the previous phase is now used by the converter 120 for returning the parachute complex 130 towards the converter 120 (schematically represented with the lowering of the weight to the ground 110 in the figure). However, the energy that is wasted for returning the parachute complex 130 towards the converter 120 is only a small fraction of the accumulated energy (since the drag that is opposed by the parachute complex 130 is now very low); therefore, a net result of the above-described two phases provides a surplus of energy that is used by the converter 120 to generate electrical energy.

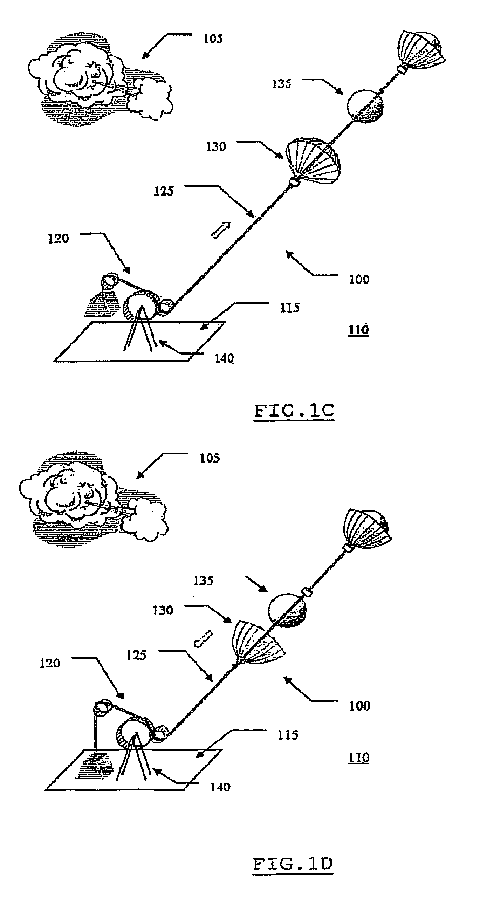

Moving to FIG.1C, when the parachute complex 130 reaches a minimum distance from the converter 120 it is open again (with its lower parachute now); for example, the minimum distance is equal to 0.3-0.7, and preferably equal to 0.4-0.6, such as equal to 0.5 times the maximum distance (for example, 400-500m). The same operations described above are then repeated. Particularly, the parachute complex 130 is carried away by the wind 105, and the cable 125 is extracted from the converter 120 so as to accumulate energy.

Likewise, as shown in FIG.1D, when the parachute complex 130 reaches the maximum distance it is closed; the energy that was accumulated in the previous phase is again used by the converter 120 for returning the parachute complex 130 towards the converter 120 (in a small fraction) and for generating electrical energy. When the parachute complex 130 reaches the minimum distance again, it is open (with its upper parachute), so as to return the generator 100 to the situation shown in FIG.1A (with the same operations described-above that are repeated continually).

This structure of the generator 100 (based on a single cable) is very simple and safe.

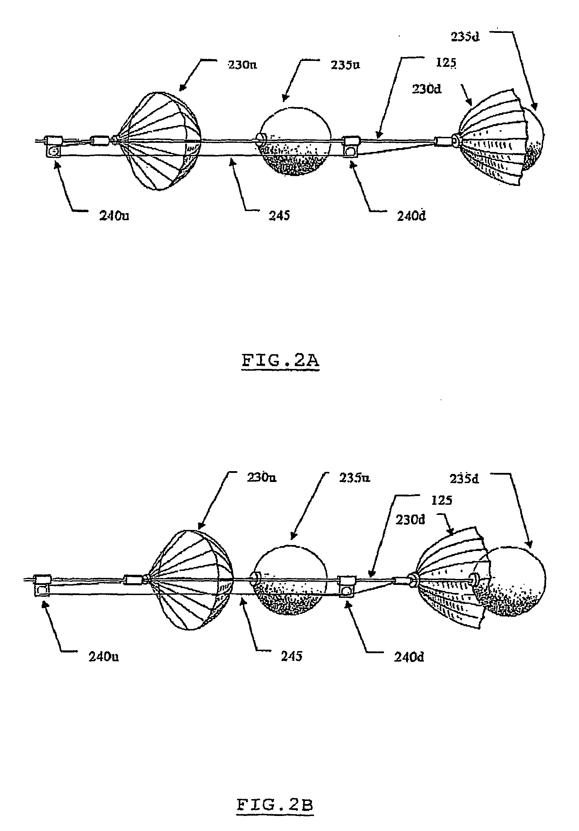

In the solution according to an embodiment of the invention, the opening and closing of the parachute complex are performed by exploiting the wind itself. Particularly, an example of operation of the solution according to an embodiment of the invention is illustrated in FIG.2A-FIG.2I.

For this purpose, the parachute complex is formed by a downstream parachute 230d and an upstream parachute 230u (with respect to the wind, flowing from the left to the right in the figure). Likewise, the balloon complex is formed by a downstream balloon 235d for the parachute 230d (fixed at a free end of the cable 125) and an upstream balloon 235u for the parachute 230u (fixed to the cable 125 between the balloon 235d and the converter, not shown to the left of the figure - for example, at 5-10m from the balloon 235d); the parachute 230u is arranged upstream the balloon 235u, and the parachute 230d is arranged upstream the balloon 235d (downstream the balloon 235u). A latch 240u for the parachute 230u is arranged upstream the balloon 230u, and a latch 240d for the parachute 230d is arranged upstream the balloon 230d (downstream the balloon 235u) - for example, 5-10m before the respective balloons 235u and 235d. The parachute 230u and the parachute 230d can slide along the cable 125 (between the latch 240u and the balloon 235u and between the latch 240d and the balloon 235d, respectively). A coupling mechanism 245 (including a cable with a pulley system) couples the parachutes 230u and 230d.

Starting from FIG.2A, the parachute 230u is locked to the latch 240u, so as to prevent its sliding along the cable 125 and then maintain it open; the parachute 230d is instead locked in the closed condition around the balloon 235d. In this phase, the wind carries away the parachute 235u and then the cable 125 so as to accumulate energy.

Considering now FIG.2B, the parachute 230u is unlocked from the latch 240u; the wind then makes the parachute 230u slide along the cable 125 (towards the right). At the same time, the parachute 230u pulls the parachute 230d in opposition to the wind through the coupling mechanism 245, so as to cause its sliding along the cable 125 in the opposite direction (towards the left).

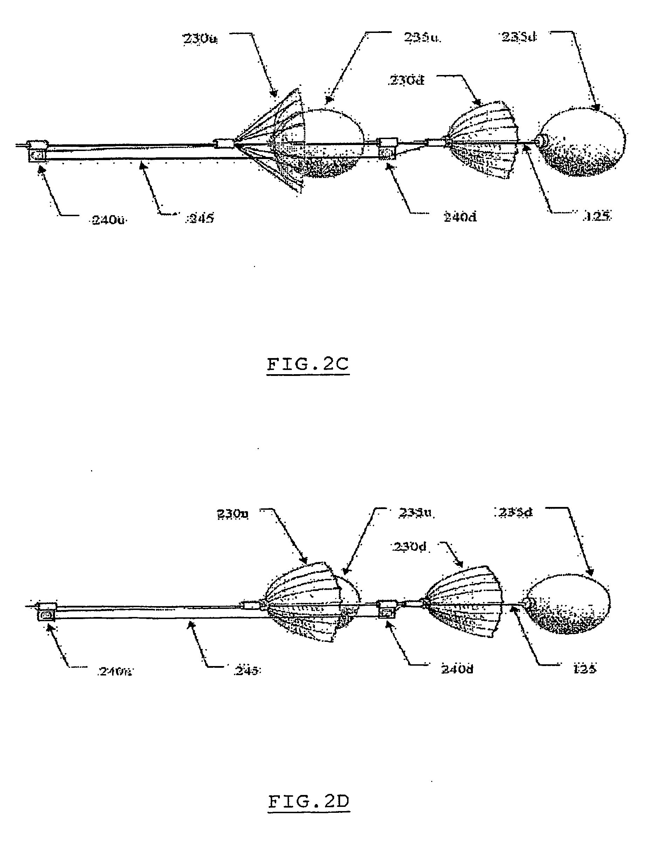

As shown in FIG.2C, when the parachute 230u reaches the balloon 235u, the parachute 230u overturns and folds around the balloon 235u so as to close.

Moving to FIG.2D, the parachute 230u is then locked in the closed condition; at the same time, the parachute 230d reaches the latch 245d and it is locked thereto. In this phase, the cable 125 can be returned to the power converter, since both the parachutes 230u and 230d are closed.

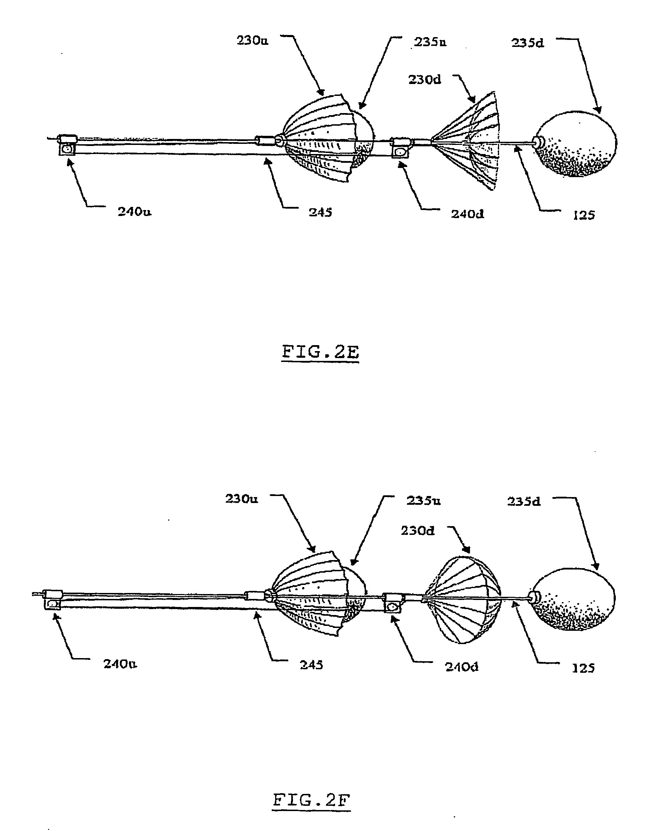

With reference to FIG.2E, the parachute 230d is unlocked from the closed condition (but remaining locked to the latch 240d); as a consequence, the wind overturns the parachute 230d.

Therefore, as shown in FIG2F, the parachute 230d opens, so as to return the generator to the same situation of FIG.2A with the parachutes 230d and 230u in opposite conditions (i.e., the parachute 230d being open and the parachute 230u being closed); as above, the wind carries away the parachute 230d and then the cable 125 so as to accumulate energy.

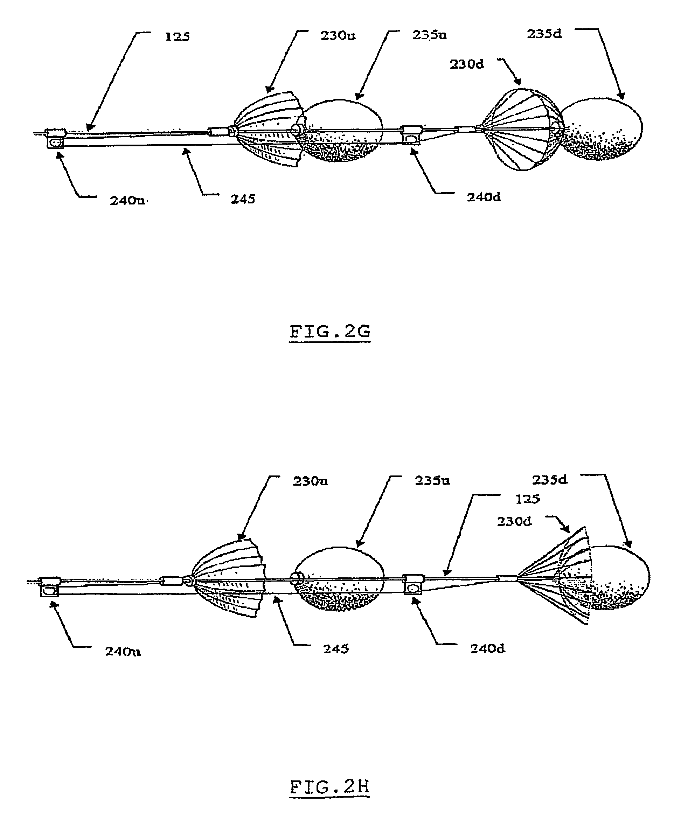

The same operations are then repeated in a dual manner. Considering in particular FIG.2G, the parachute 230d is unlocked from the latch 240d (so that the wind makes it slide along the cable 125). At the same time, the parachute 240d pulls the parachute 230u in opposition to the wind through the coupling mechanism 245, so as to cause its sliding along the cable 125 in the opposite direction.

As shown in FIG.2H, when the parachute 230d reaches the balloon 235d, the parachute 230d overturns and folds around the balloon 235d so as to close.

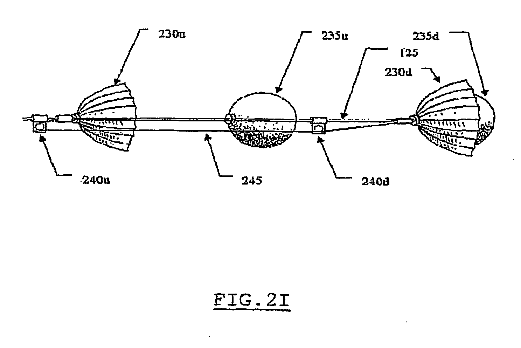

Moving to FIG.2I, the parachute 230d is then locked in the closed condition; at the same time, the parachute 230u reaches the latch 240u and it is locked thereto. In this phase, the cable 125 can again be returned to the power converter, since both the parachutes 230u and 230d are closed. The parachute 230u is then unlocked from the closed condition (but remaining locked to the latch 240u); as a consequence, the wind overturns and opens the parachute 230u so as to return the generator 100 to the situation shown in FIG.2A (with the same operations described-above that are repeated continually).

The proposed solution exploits the wind itself both to open each parachute (once it has been unlocked from the corresponding latch after being returned downstream by the other parachute) and to close it (against the corresponding balloon). Therefore, the desired result is achieved without any complex structure (for example, driving cables from the ground or motors on board of the parachutes).

This strongly simplifies the generator (with a corresponding reduction of its costs); the simplification of the generator also increases its reliability. Moreover, it is possible to avoid the use of any risky component (such as electrical cables from the converter to the parachutes).

It should be noted that the active actions that are now required to open and close the parachutes (for example, to unlock them from the corresponding latches or from the closed condition) only require a very low energy (since the actual operations of opening and closing the parachutes are instead performed by the wind). Therefore, the corresponding mechanisms that may be installed on board of the parachutes are very simple and light (so that they can be supplied locally - for example, by renewable energy generators or by batteries); moreover, this allows the use of very large parachutes, which can generate a high amount of energy per generator (for example, of the order of some hundreds of MW to some GW).

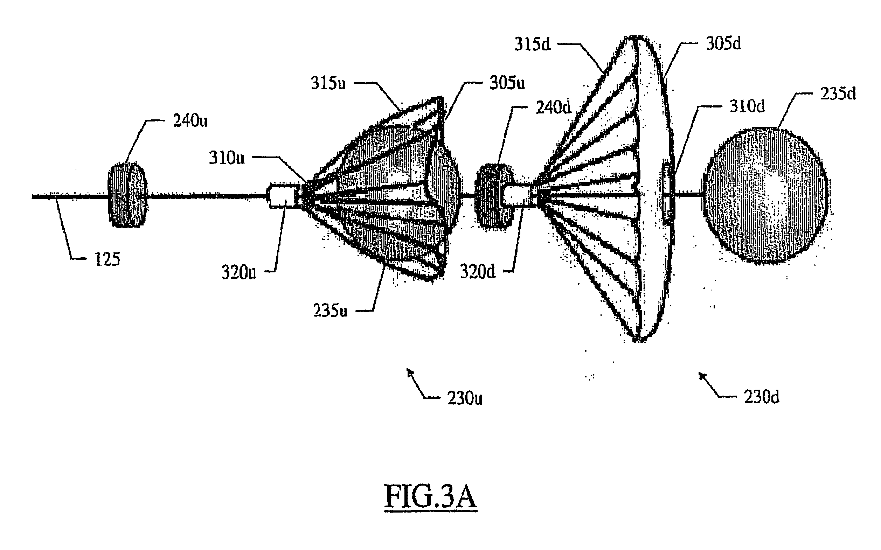

An exemplary implementation of the solution according to an embodiment of the invention is shown in FIG.3A-FIG.3E.

In detail (see FIG.3A), each parachute 230d,230u includes a sail 305d,305u (for example, of the round type with a diameter of 8-15m for a balloon 235d,235u with a diameter of 5-8m). The sail 305d,305u is provided with an apical hole 310d,310u, which allows its sliding along the cable 125. Preferably, the apical hole 310d,310u is associated with a screw, which rotates the sail 310d,305u when it slides along the cable 125 (clockwise or counter-clockwise); this increases the drag of the sail 310d,305u when it is carried away by the wind (for example, by 15-30%), with a corresponding increase of the yield of the generator.

Suspension lines 315d,315u (for example, 4-20) extend from a border of the sail 305d,305u to a collector 320d,320u (for example, a bush), which can slide along the cable 125 as well. The parachute 230d,230u is locked to the latch 240d,240u by locking the collector 320d,320u thereto; the parachute 230d,230u is instead locked in the closed condition by locking the collector 320d,320u to the apical hole 310d,310u. For this purpose, in an embodiment of the invention a ratchet is associated with the latch 240d,240u and another ratchet is associated with the apical hole 310d,310u.

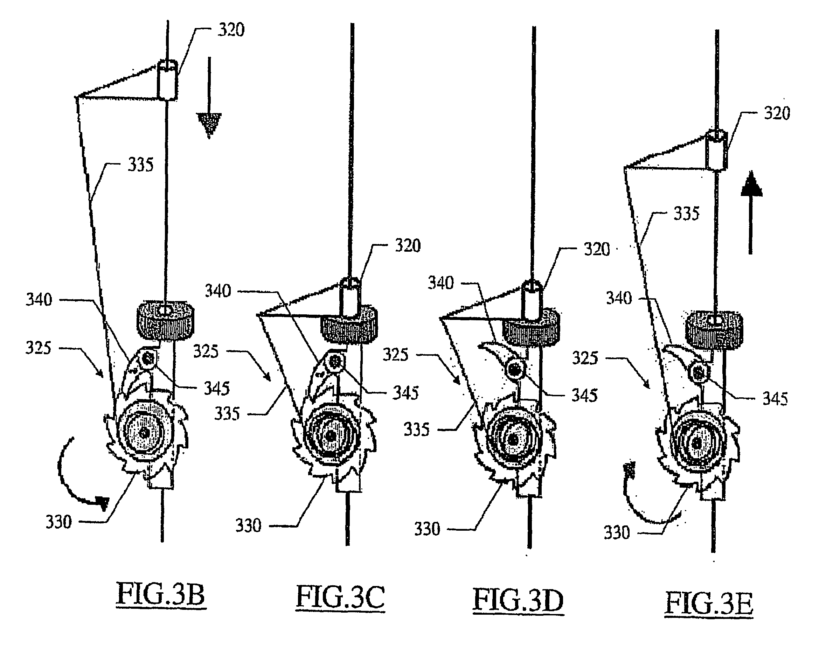

In detail, as shown in FIG.3B, a generic ratchet 325 (for either the latch or the apical hole) includes a gearwheel 330 that is fixed to the latch or the apical hole. A constraining cable 335 extends between the gearwheel 330 and the collector, generically denoted with the reference 320 (being provided with a spacer projecting laterally from the cable 125); the gearwheel 330 is spring biased so as to wound the cable 335 around it (counter-clockwise in the example at issue). The ratchet 325 also includes a pawl 340 (which is likewise fixed to the latch or to the apical hole); the pawl 340 is spring biased to engage the gearwheel 330, so as to prevent its rotation clockwise, and then the unwinding of the cable 335. A relay 345 disengages the pawl 340 from the gearwheel 330 in response to a remote unlocking command (received from the controller of the generator).

Moving to FIG.3C, when the collector 320 moves towards the ratchet 325 (because the parachute is pulled towards the latch by the other parachute or because the sail is folded around the balloon by the wind), the cable 335 thus wounds around the gearwheel 330 (which rotates counter-clockwise freely). However, after the collector 320 has reached the ratchet 325, the cable 335 cannot unwind (since the pawl 340 prevents the rotation clockwise of the gearwheel 330), so that the collector 320 is maintained in this position (i.e., locked to the latch or in the closed condition).

With reference now to FIG.3D, when the relay 345 receives the unlocking command, the pawl 340 disengages from the gearwheel 330.

In this condition, as shown in FIG.3E, the gearwheel 330 is free to rotate counter-clockwise, so that the collector 320 can move away from the ratchet 325 by unwinding the cable 325 (because the parachute is carried away from the latch or because the sail is carried away from the collector by the wind).

The proposed implementation only requires a relay 345 to unlock the parachute from the latch (to cause its opening after reaching the balloon) or to unlock the parachute from the closed condition (to cause its opening). Therefore, the relay 345 may be supplied by a simple system that is installed on board of the parachute (for example, a battery, a photo-voltaic generator, or a small dedicated eolic generator). Moreover, the control of the ratchet only involves the sending of simple unlocking commands; therefore, these unlocking commands may be transmitted from the ground - for example, with a wireless connection (so as to avoid the addition of any auxiliary cable).

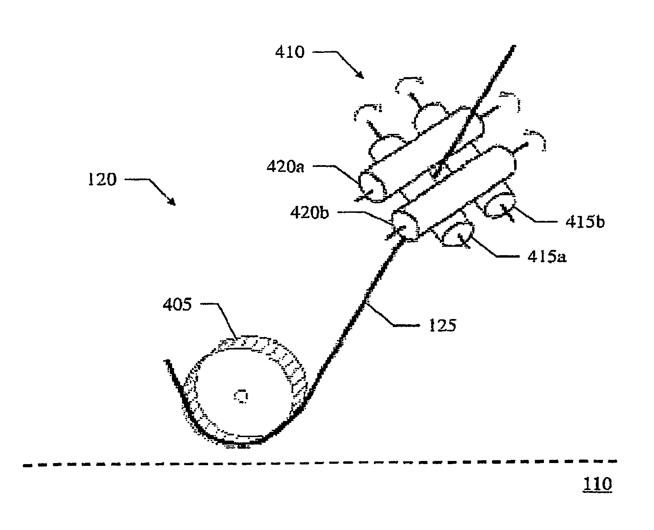

With reference now to FIG.4, there is shown a schematic representation of a particular of the generator according to an embodiment of the invention.

In detail, the converter 120 includes a drum 405 for wounding the cable 125. A guide 410 is used to maintain the cable 125 within the drum 405 with a correct slanting. For this purpose, the guide 410 includes a pair of idle rollers 415a,415b and another pair of idle rollers 420a,420b; the idle rollers of each pair 415a,415b and 420a,420b are parallel to each other (for example, at 5-10cm) The idle rollers 415a,415b are arranged transversally to the idle rollers 420a,420b; in this way, a passage for the cable 125 is formed between the idle rollers 415a,415b and between the idle rollers 420a,420b.

In this way, the cable 125 can slant with respect to the ground 110 in whatever direction; moreover, the idle rollers 415a, 415b, 420a and 420b avoid (or at least substantially reduce) any wear of the cable 125 (which wound instead be caused by the friction thereof against a fixed guide).

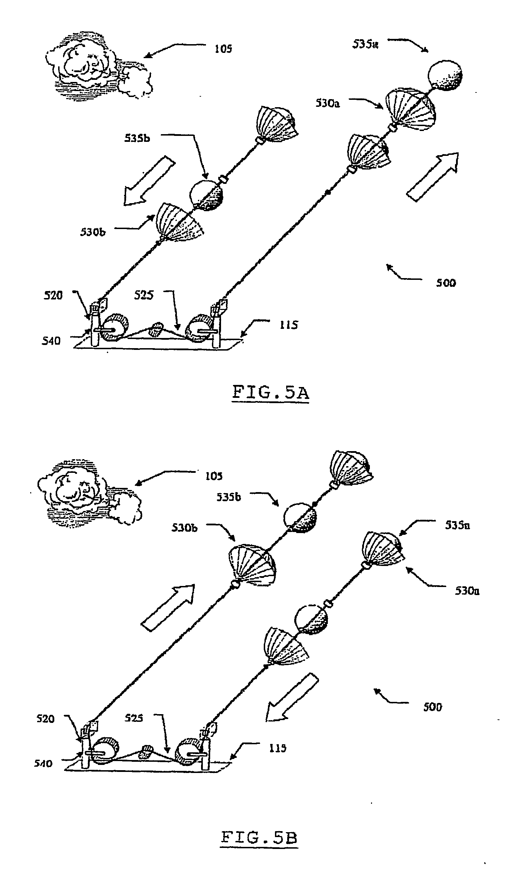

Moving to FIG.5A-FIG.5D, there is illustrated operation of another generator (denoted with the reference 500) wherein the solution according to an embodiment of the invention can be used. Particularly, the generator 500 includes an energy converter 520 of the reciprocating type (mounted on the same base 115 but with a different controller 540); for example, the generator 520 includes a mechanism for converting the movement of a rotor in both directions into a unidirectional rotation that is used to generate electrical energy. In this case, the generator 500 includes two twin sections, each one being formed by a parachute complex 530a,530b and a balloon complex 535a,535b as above; in this case, however, a (single) cable 525 connects the parachute complex 530a and the parachute complex 530b to each other through the converter 520.

In operation, starting from FIG.5A, when the parachute complex 530a is open (with its upper parachute) the wind 105 carries the parachute complex 530a away from the converter 520. In this phase, the cable 525 pulls the other parachute complex 530b that is closed towards the converter 520. However, as above the energy that is wasted for pulling the parachute complex 530b towards the converter 120 is only a small fraction of the energy that is produced by the parachute complex 530a being carried away by the wind; therefore, a net result of this phase provides a surplus of energy that is used by the converter 520 to generate electrical energy.

Considering now FIG.5B, when the parachute complex 530a reaches the maximum distance it is closed; at the same time, the parachute complex 530b reaches the minimum distance, so that it is open (with its lower parachute). The two parachute complexes 530a and 530b then invert their function. Particularly, the wind 105 now carries the parachute complex 530b away from the converter 520, and the cable 525 pulls the parachute complex 530a towards the converter 520 (with the resulting surplus of energy that is again used by the converter 520 to generate electrical energy).

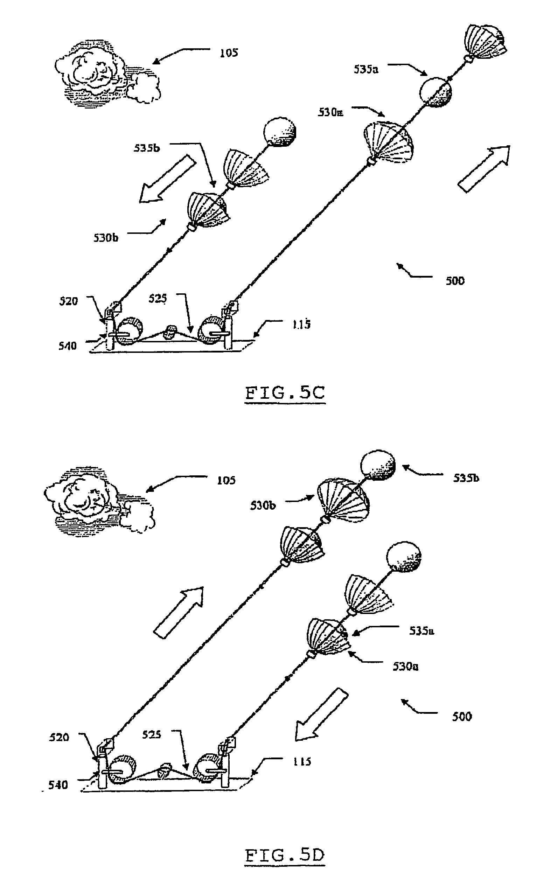

Moving to FIG.5C, when the parachute complex 530b reaches the maximum distance and the parachute complex 530a reaches the minimum distance, the parachute complex 530b is closed and the parachute complex 530a is open again (with its lower parachute now). The same operations described above are then repeated. Particularly, the parachute complex 530a is carried away by the wind 105, and the cable 525 pulls the parachute complex 530b towards the converter 520 (with the resulting surplus of energy that is used by the converter 520 to generate electrical energy).

Likewise, as shown in FIG.5D, when the parachute complex 530a reaches the maximum distance and the parachute complex 530b reaches the minimum distance, the parachute complex 530a is closed and the parachute complex 530b is open again (with its upper parachute now); therefore, the parachute complex 530b is carried away by the wind 105, and the cable 525 pulls the other parachute complex 530a towards the converter 520 (with the resulting surplus of energy that is used by the converter 520 to generate electrical energy). When the parachute complex 530b reaches the maximum distance and the parachute complex 530a reaches the minimum distance, the parachute complex 530b is closed and the parachute complex 530a is open (with its upper parachute), so as to return the generator 500 to the situation shown in FIG.5A (with the same operations described-above that are repeated continually).

The generator 500 provides a higher yield (since it exploits the wind 105 itself to return the parachute complexes 530a and 530b towards the converter 520, without any waste of the produced energy).

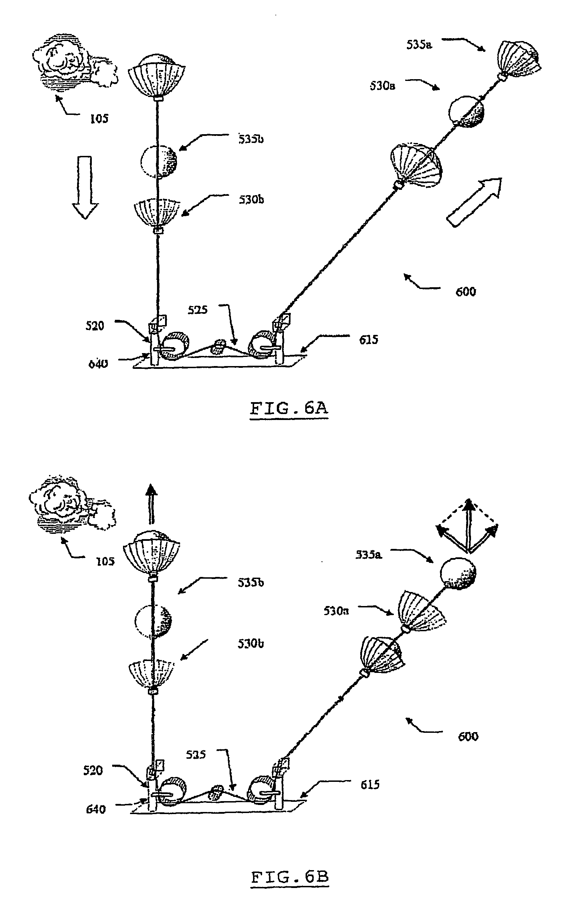

With reference now to FIG.6A-FIG.6D, there is illustrated operation of another generator (denoted with the reference 600) according to an embodiment of the invention. Particularly, the generator 600 has the same structure as above, with a different base 615 (and a corresponding controller 640); particularly, the base 615 is now installed at ground 110 so as to be free to rotate around a vertical axis.

Starting from FIG.6A, when the parachute complex 530b is closed, a terminal portion of the cable 525 associated with it extends substantially in vertical from the converter 520, because of the buoyancy of the balloon complex 535b (being the action of the wind 105 on the balloon complex 535b negligible). Instead, when the parachute 530a is open (with its lower parachute), a terminal portion of the cable 525 associated with it is slanting from the converter 520 in the direction of the wind 105, because of its action on the parachute complex 530a.

Considering now FIG.6B, when the parachute complex 530a reaches the maximum distance it is closed. The parachute complex 530b instead remains closed. Particularly, in an embodiment of the invention the parachute complex 530b reaches the converter 520 and it is locked in this position for a while; in this way, it is possible to perform fast operations on the corresponding section of the generator 600 (for example, to inflate the balloon complex 535b, to recharge batteries being used to supply the relays of the ratchets, and the like).

In this condition (possibly after the unlocking of the parachute complex 530b from the converter 520), the buoyancy of the balloon complex 535b (acting vertically upwards) is completely applied to the cable 525 (arranged in the same direction); conversely, only a component of the (same) buoyancy of the balloon complex 535a (again acting vertically upwards) is applied to the cable 525 (slanting thereto), while a remaining component of the buoyancy of the balloon complex 535a acts perpendicularly to the cable 525 (towards the converter 520). As a consequence, the parachute complex 530b lifts, since the upwards force (due to the buoyancy of the balloon complex 535b) exceeds the downwards force (due to the component along the cable 525 of the buoyancy of the balloon complex 535a); at the same time, the parachute complex 530a lowers approaching the converter 520 (because of the component perpendicular to the cable 525 of the buoyancy of the balloon complex 535a).

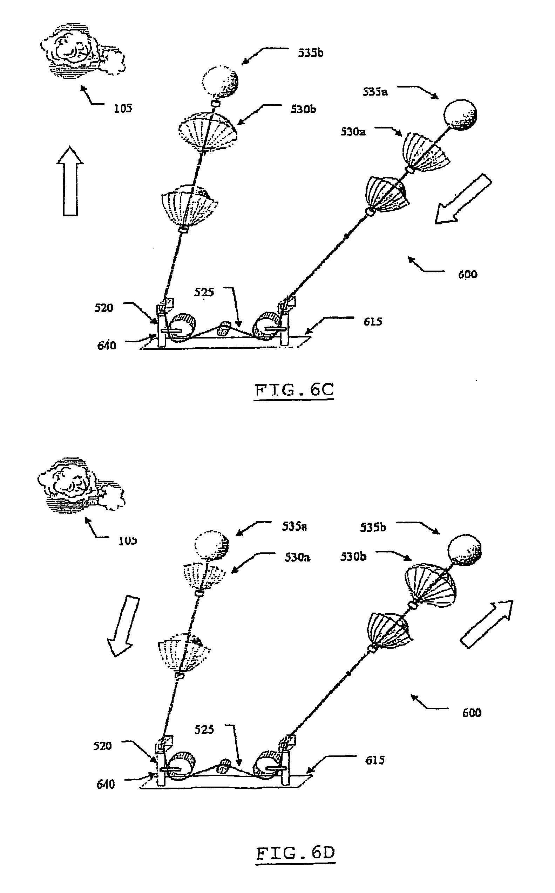

As shown in FIG.6C, the parachute complex 530b is open (with its upper parachute) with a delay from the closing of the parachute complex 530a. For example, this delay is set to a predefined time interval (such as 10-60s); alternatively, the delay is defined by a predefined offset above the minimum distance (such as 0.2-0.4 times the minimum distance, or 80-160m). Preferably, in this condition the parachute complex 530b is at a lower distance from the converter 520; for example, the distance of the parachute complex 530b is equal to 0.3-0.7, and preferably equal to 0.4-0.6, such as equal to 0.5 times the distance of the parachute complex 525b (for example, 200-250m). In this way, it is strongly reduced the risk of any twist between the terminal portions of the cable 525 associated with the two parachute complexes 530a and 530b.

As soon as the parachute complex 530b is open, the action of the wind 105 generates a torque (since it is never perfectly aligned with the rotation axis of the base 615) that rotates the base 615 by 180° around its vertical axis; consequently, as shown in FIG.6D, the parachute complex 530b passes downstream and the parachute complex 530a passes upstream the wind 105. In this way, the parachute complex 530b is carried away by the wind 105 (with the corresponding terminal portion of the cable 525 that slants from the converter 520 in the direction of the wind 105); at the same time, the cable 525 pulls the parachute complex 530a towards the converter 520 (with the corresponding terminal portion of the cable 525 that moves towards the vertical from the converter 520). In this way, the parachute complex currently open is always downstream the wind 105, while the other parachute complex being closed is upstream (so as to further reduce the risk of any twist between the corresponding terminal portions of the cable 525).

The same operations are then repeated in a dual manner for the other parachutes of each complex 530a and 530b, until the generator 500 returns to the situation shown in FIG.6A (with the same operations described above that are repeated continually).

Naturally, in order to satisfy local and specific requirements, a person skilled in the art may apply to the solution described above many logical and/or physical modifications and alterations. More specifically, although this solution has been described with a certain degree of particularity with reference to preferred embodiment(s) thereof, it should be understood that various omissions, substitutions and changes in the form and details as well as other embodiments are possible. Particularly, the same solution may even be practiced without the specific details (such as the numerical examples) set forth in the preceding description to provide a more thorough understanding thereof; conversely, well-known features may have been omitted or simplified in order not to obscure the description with unnecessary particulars. Moreover, it is expressly intended that specific elements and/or method steps described in connection with any embodiment of the disclosed solution may be incorporated in any other embodiment as a matter of general design choice.

For example, similar considerations apply if the generator has a different structure or includes equivalent components (either separate to each other or combined together, in whole or in part).

Particularly, the same solution may also be applied to generate energy from any other fluid flow (for example, steams or tides of water). Likewise, the fluid flow may be converted to any other type of energy (for example, by compressing a gas). Moreover, similar considerations apply if the parachutes have a different shape (for example, of the square type), of if they are replaced with equivalent means based on generic sails (for example, kites, paragliders, wings, drogues); in any case, the parachutes may be switched between similar active and passive conditions (wherein the carrying away by the wind is generically higher in the active condition than in the passive condition - for example, with a Cx=0.8-1 and a Cox=0.1-0.3, respectively). The connections cable (between the parachutes and the convert) may be replaced with an equivalent element (for example, a chain). Likewise, it is possible to return the parachutes in the closed condition towards the converter with other systems (for example, a biasing spring acting on the drum of the converter, or an auxiliary motor that acts on this drum). Naturally, the above-mentioned values of the minimum distance and maximum distance are merely illustrative, and they should not be interpreted in a limitative manner.

Even though in the preceding description reference has been made to a specific mechanism for opening and closing the parachutes, nothing prevents applying the same solution to equivalent structures; for example, the sails may slide along the cable externally thereto (only through the collector), or the parachutes may lock to the cable directly (without any additional latch).

A basic implementation of the proposed solution without any balloons (or equivalent support elements for the parachutes) is not excluded - for example, in the water.

It is also possible to provide a single balloon for each pair of parachutes; moreover, the use of dedicated stopping elements (for causing the closing of the parachutes independently of the balloons) is practicable.

In any case, the balloons may have any shape (for example, spherical or elongated), and more generally they may be replaced with any other element capable of self-moving the parachutes away from the converter (for example, sinkers in the water).

Alternatively, nothing prevents requiring an active command to lock the parachutes in the closed condition and/to along the cable as well.

Naturally, the ratchets may have any other structure (for example, based on racks instead of the gearwheels), or they may be replaced with equivalent structures.

Similar considerations apply if the generator is controlled in a different way (for example, by local controllers installed directly on board of the parachutes).

In a different embodiment of the invention, the maximum distance and the minimum distance may be detected in another way - for example, by means of altimeters mounted on board of the balloons.

The proposed guide for the connection cable is not strictly necessary, and it may be omitted in a basic implementation of the proposed solution.

The generator with two sections as well may have a different structure or include equivalent components (for example, the rotatable base).

Additional or alternatives parameters may be taken into account to trigger the opening of each parachute complex (with a delay from the closing of the other parachute complex); for example, for this purpose it is possible to measure an altitude of the balloons, a slanting of the connection cable, a force of the wind, and the like. In any case, the above-mentioned values of the delay are merely illustrative, and they should not be interpreted in a limitative manner. In addition, it is also possible to act on the connection cable (by the converter working as a motor) to facilitate the lifting of the parachute complex to be opened.

Nothing prevents using a stationary base in the generator with the delayed opening of the parachute complexes as well (for example, with the two sections thereof that are arranged transversally to the wind).

Vice-versa, it should be noted that the delay of the opening of the parachute complexes, as well as the corresponding additional features (for example, the stop of the parachutes at ground, the rotation of the base, and the like) are suitable to be used (alone or combined with each other) even without the specific mechanism for opening and closing the parachutes (exploiting the wind) of the proposed solution.

Similar considerations apply if the rotation of the parachutes around the connection cable is achieved in a different way (for example, by means of a screw arranged on the collector) - even if this feature is not strictly necessary and it may be omitted in a different embodiment of the invention.

The same solution lends itself to be implemented with an equivalent method (by using similar steps, removing some steps being non-essential, or adding further optional steps); moreover, the steps may be performed in a different order, concurrently or in an interleaved way (at least in part).

In addition, the generator may be controlled by any other device (configured through a corresponding program). In any case, the program may take any form suitable to be used by any data processing system or in connection therewith. Moreover, it is possible to provide the program on any computer-usable medium; the medium can be any element suitable to contain, store, communicate, propagate, or transfer the program (for example, of the electronic, magnetic, optical, electromagnetic, infrared, or semiconductor type). In any case, the solution according to an embodiment of the present invention lends itself to be implemented even with a hardware structure (for example, integrated in a chip of semiconductor material), or with a combination of software and hardware.

## Claims

1. An energy generation system (100;500;600) for generating energy from a fluid flow (105), the system including:
energy conversion means (120;520),
sail means (130;530a,530b) switchable between an active condition for being carried away by the fluid flow and a passive condition for minimizing said carrying away,
connection means (125;525) connecting the sail means to the energy conversion means for generating said energy when the sail means in the active condition carries away the connection means from the energy conversion means,
return means (120;530a,530b) for returning the connection means with the sail means in the passive condition towards the energy conversion means, and
switching means for switching the sail means to the passive condition and to the active condition in response to a maximum distance and to a minimum distance thereof, respectively, of the sail means from the energy conversion means,
**characterized in that**
the sail means includes a pair of sail modules (230u,230d) slidable along the connection means, each sail module being individually switchable between the active condition and the passive condition, and wherein the switching means includes:
stopping means (135;535a,535b) for each sail module, the stopping means being adapted to stop the sliding of the corresponding sail module when carried away in the active condition thereby causing the switching thereof to the passive condition,
passive locking means (310u,310d,325) for each sail module, the passive locking means being adapted to lock the corresponding stopped sail module in the passive condition,
coupling means (245) arranged between the sail modules along a corresponding portion of the connection means for sliding each sail module locked in the passive condition in opposition to the fluid flow to a standing position (240u,240d) along the connection means by the sliding of the other sail module when carried away in the active condition,
active locking means (240u,240d,325) for each sail module, the active locking means being adapted to lock the corresponding sail module in the standing position, and
control means (140;540;640) for alternatively controlling each one of the sail modules (230d,230u) to unlock the sail module in the active condition from the corresponding standing position in response to the maximum distance thereby causing the sliding of the sail module being carried away by the fluid flow, and to unlock the sail module being locked in the passive condition in the corresponding standing position from the passive condition in response to the minimum distance thereby causing the switching thereof to the active condition.

2. The system (100;500;600) according to claim 1, wherein each sail module (230u,230d) includes a sail (305u,305d) with an apical hole (310u,310d) being slidable along the connection means (125;525), a collector (320u,320d) being slidable along the connection means, and suspension lines (315u,315d) between the sail and the collector, the corresponding passive locking means (310u,310d,325) including means (325) for locking the collector to the apical hole and the corresponding active locking means (240u,240d,325) including means (325) for locking the collector in the standing position.

3. The system (100;500;600) according to claim 1 or 2, further including support means (135;535a,535b) for self-moving the sail means (130;530a,530b) away from the energy conversion means (120;520) transversally to the fluid flow (105).

4. The system (100;500;600) according to claim 3, wherein the support means (135;535a,535b) includes a support module (235u,235d) being fixed to the connection means for each sail module (230u,230d), the support module defining the corresponding stopping means.

5. The system (100;500;600) according to claim 4, wherein the fluid flow is wind (105), each support module (235u,235d) including an aerostatic balloon.

6. The system (100;500;600) according to any claim from 1 to 5, wherein each passive locking means (310u,310d,325) includes:
passive self-locking means (330-340) for self-locking the sail module (130;530a,530b) in the passive condition when the sail module reaches the stopping means (135;535a,535b), and
passive unlocking means (345) for unlocking the sail module from the passive condition in response to a passive unlocking command,
and wherein each active locking means (240u,240d,325) includes:
active self-locking means (330-340) for self-locking the sail module in the standing position (240u,240d) when the sail module reaches the standing position, and
active unlocking means (345) for unlocking the sail module from the standing position in response to an active unlocking command.

7. The system (100;500;600) according to claim 6 when dependent directly on indirectly on claim 2, wherein each passive locking means (310u,310d,325) and active locking means (240u,240d,325) includes:
a gearwheel (330) being mounted on the sail (305u,305d) at the apical hole (310u,310d) or on the connection means (125;525) at the standing position (240u,240d), respectively,
a constraining cable (335) extending between the collector (320) and the gearwheel, the gearwheel being biased to wound the constraining cable around the gearwheel,
a pawl (340) being mounted on the sail at the apical hole or on the connection means at the standing position, respectively, the pawl being biased to engage the gearwheel thereby preventing an unwinding of the constraining cable, and
means (345) for disengaging the pawl from the gearwheel in response to the passive unlocking command or the active unlocking command, respectively.

8. The system (100;500;600) according to any claim from 1 to 7; further including detection means (140;540;640) for detecting the maximum distance and the minimum distance according to an extension of the connection means (125;525) from the energy conversion means (120;520).

9. The system (100;500;600) according to any claim from 1 to 8, wherein the connection means (125;525) includes a connection cable, the system further including guiding means (410) for guiding the connection cable between the energy conversion means (120;520) and the sail means (130;530a,530b), wherein the guiding means includes a first pair of parallel idle rollers (415a,415b) and a second pair of parallel idle rollers (420a,420b) being arranged transversally to the first pair of idle rollers, the connection cable passing through the first pair of idle rollers and the second pair of idle rollers.

10. The system (500;600) according to any claim from 1 to 9, further including further sail means (530b) being connected to the energy conversion means (520) through the connection means (525), and further switching means for switching the further sail means to the passive condition and to the active condition in response to the maximum distance and to the minimum distance, respectively, each one of the sail means (530a,530b) in the active condition operating alternatively as the return means for another one of sail means in the passive condition.

11. The system (500;600) according to claim 10, further including means (640) for delaying the switching of each sail means (530a,530b) in the passive condition to the active condition with respect to the switching of the other sail means in the active condition to the passive condition.

12. The system (500;600) according to claim 10 or 11, further including a base (615) for installing the energy conversion means (520) at ground, the base being adapted to rotate around a rotation axis perpendicular to the ground.

13. The system (500;600) according to any claim from 1 to 12, further including means (310u,310d) for rotating each sail module (230u,230d) around the connection means (125;525) when the sail module is carried away.

14. A method for generating energy from a fluid flow (105), the method including the repetition of the steps of:
switching sail means (130;530a,530b) to an active condition for being carried away by the fluid flow in response to a minimum distance of the sail means from energy conversion means (120;520),
generating said energy by the energy conversion means when the sail means in the active condition carries away connection means (125;525) connecting the sail means to the energy conversion means therefrom,
switching the sail means to a passive condition for minimizing said carrying away in response to a maximum distance of the sail means from the energy conversion means, and
returning the connection means with the sail means in the passive condition towards the energy conversion means,
**characterized in that**
the sail means includes a pair of sail modules (230d,230u) slidable along the connection means, each sail module being individually switchable between the active condition and the passive condition, wherein alternatively for the sail modules the step of switching the sail means to a passive condition includes:
unlocking one of the sail modules in the active condition from a corresponding standing position (240u,240d) along the connection means thereby causing the sliding of the sail module being carried away by the fluid flow and the sliding of another one of the sail modules being locked in the passive condition in opposition to the fluid flow to the corresponding standing position by the sail module through coupling means arranged between the sail modules along a corresponding portion of the connection means,
stopping the sliding of the sail module thereby causing the switching thereof to the passive condition,
locking the stopped sail module in the passive condition,
locking the other sail module in the corresponding standing position, and
the step of switching sail means to an active condition includes:
unlocking one of the sail module being locked in the passive condition in the corresponding standing position from the passive condition thereby causing the switching thereof to the active condition.

15. A computer program including code means for causing a data processing system (140;540;640) to alternatively control each one of the sail modules (230d,230u) of the system of any claim from 1 to 13 to unlock the sail module in the active condition from the corresponding standing position in response to the maximum distance and to unlock the sail module being locked in the passive condition in the corresponding standing position from the passive condition in response to the minimum distance.

## Patentansprüche

1. Ein Energieerzeugungssystem (100;500;600) zum Erzeugen von Energie aus einem Fluidstrom (105), wobei dieses System Folgendes umfasst:
Energieumwandlungsmittel (120;520),
Segelmittel (130;530a,530b), umstellbar zwischen einem aktiven Zustand zum Fortgetragenwerden durch den Fluidstrom und einem passivem Zustand zum Minimieren des besagten Fortgetragenwerdens,
Verbindungsmittel (125;525), das Segelmittel mit dem Energieumwandlungsmittel verbindend, und zwar zum Zweck des Erzeugens der besagten Energie, während das Segelmittel im aktivem Zustand das Verbindungsmittel in Richtung vom Energieumwandlungsmittel weg fortträgt,
Rückführungsmittel (120;530a,530b) zum Zurückführen des Verbindungsmittels mit dem im passiven Zustand befindlichen Segelmittel in Richtung zum Energieumwandlungsmittel hin, und
Umstellmittel zum Umstellen des Segelmittels in den passiven Zustand beziehungsweise in den aktivem Zustand bei Erreichen eines Maximalabstands beziehungsweise eines Minimalabstands des Segelmittels von dem Energieumwandlungsmittel,
**dadurch gekennzeichnet, dass**
das Segelmittel ein Paar von entlang dem Verbindungsmittel verschiebbaren Segelmodulen (230u,230d) umfasst, wobei jedes dieser Segelmodule einzeln zwischen dem aktiven Zustand und dem passiven Zustand umstellbar ist und wobei das Umstellmittel Folgendes umfasst:
Stoppmittel (135;535a,535b) für jedes Segelmodul, wobei dieses Stoppmittel dafür ausgestaltet ist, das Verschieben des korrespondierenden Segelmoduls zu stoppen, während dieses im aktiven Zustand fortgetragen wird, und dieses dadurch in den passiven Zustand umzustellen,
Passivzustand-Verriegelungsmittel (310u,310d,325) für jedes Segelmodul, wobei dieses Passivzustand-Verriegelungsmittel dafür ausgestaltet ist, das korrespondierende gestoppte Segelmodul im passiven Zustand zu blockieren,
Kupplungsmittel (245), angeordnet zwischen den Segelmodulen entlang einem korrespondierenden Teil des Verbindungsmittels, dienend zum Verschieben jedes in dem passiven Zustand verriegelten Segelmoduls entgegen dem Fluidstrom in eine Stehposition (240u,240d) entlang dem Verbindungsmittel durch Verschieben des anderen Segelmoduls, während dieses in dem aktiven Zustand fortgetragen wird,
Aktiv-Verriegelungsmittel (240u,240d,325) für jedes Segelmodul, wobei dieses Aktiv-Verriegelungsmittel dafür ausgestaltet ist, das korrespondierende Segelmodul in Stehposition zu blockieren, und
Steuerungsmittel (140;540;640) zum wechselweisen Steuern jedes der Segelmodule (230d,230u) in der Weise, dass das Segelmodul im aktiven Zustand aus der korrespondierenden Stehposition bei Erreichen des Maximalabstands entriegelt und dadurch ein Verschieben des von Fluidstrom weggetragenen Segelmoduls bewirkt wird, und dass das im passiven Zustand in der korrespondierenden Stehposition verriegelte Segelmodul aus dem passiven Zustand bei Erreichen des Minimalabstands entriegelt und dadurch ein Umstellen dieses Segelmoduls in den aktiven Zustand bewirkt wird.

2. Ein System (100;500;600) gemäß Anspruch 1, wobei jedes Segelmodul (230u,230d) ein entlang dem Verbindungsmittel (125;525) verschiebbares Segel (305u,305d) mit einer an der Spitze befindlichen Öffnung (310u,310d), einen entlang dem Verbindungsmittel verschiebbaren Zusammenführer (320u,320d) sowie zwischen dem Segel und dem Zusammenführer sitzende Aufhängungsleinen (315u,315d) umfasst, wobei das korrespondierende Passivzustand-Verriegelungsmittel (310u,310d,325) ein Mittel (325) zum Verriegeln des Zusammenführers an der an der Spitze befindlichen Öffnung umfasst und wobei das korrespondierende Aktiv-Verriegelungsmittel (240u,240d,325) ein Mittel (325) zum Verriegeln des Zusammenführers in der Stehposition umfasst.

3. Ein System (100;500;600) gemäß Anspruch 1 oder 2, außerdem enthaltend Unterstützungsmittel (135;535a,535b) für das Selbstbewegen des Segelmittels (130;530a,530b) weg vom Energieumwandlungsmittel (120;520) und quer zum Fluidstrom (105).

4. Ein System (100;500;600) gemäß Anspruch 3, wobei das Unterstützungsmittel (135;535a,535b) ein Unterstützungsmodul (235u,235d) umfasst, das an dem Verbindungsmittel für jedes Segelmodul (230u,230d) befestigt ist und das korrespondierende Stoppmittel darstellt.

5. Ein System (100;500;600) gemäß Anspruch 4, wobei der Fluidstrom Wind (105) ist und jedes Unterstützungsmodul (235u,235d) einen Gasballon umfasst.

6. Ein System (100;500;600) gemäß einem beliebigen der Ansprüche 1 bis 5, wobei jedes Passivzustand-Verriegelungsmittel (310u,310d,325) Folgendes umfasst:
Passiv-Selbstverriegelungsmittel (330-340) zum Selbstverriegeln des Segelmoduls (130;530a,530b) im passiven Zustand, wenn das Segelmodul das Stoppmittel (135;535a,535b) erreicht, und
Passiv-Entriegelungsmittel (345) zum Entriegeln des Segelmoduls aus dem passiven Zustand in Reaktion auf einen Passiv-Entriegelungsbefehl,
und wobei jedes Aktiv-Verriegelungsmittel (240u,240d,325) Folgendes umfasst:
Aktiv-Selbstverriegelungsmittel (330-340) zum Selbstverriegeln des Segelmoduls in der Stehposition (240u,240d), wenn das Segelmodul die Stehposition erreicht, und
Aktiv-Entriegelungsmittel (345) zum Entriegeln des Segelmoduls aus der Stehposition in Reaktion auf einen Aktiv-Entriegelungsbefehl.

7. Ein System (100;500;600) gemäß Anspruch 6, sofern unmittelbar oder mittelbar von Anspruch 2 abhängend, wobei jedes Passivzustand-Verriegelungsmittel (310u,310d,325) und jedes Aktiv-Verriegelungsmittel (240u,240d,325) Folgendes umfasst:
ein Getrieberad (330), das an dem Segel (305u,305d) an der an der Spitze befindlichen Öffnung (310u,310d) oder an dem Verbindungsmittel (125;525) an der Stehposition (240u,240d) befestigt ist,
ein Zwangskabel (335) zwischen dem Zusammenführer (320) und dem Getrieberad, wobei das Getrieberad so voreingestellt ist, dass das Zwangskabel um das Getrieberad herumgewickelt ist,
eine Klinkensperre (340), die an dem Segel an der an der Spitze befindlichen Öffnung oder an dem Verbindungsmittel an der Stehposition befestigt ist, wobei die Klinkensperre vorgespannt ist, um in das Getrieberad zu greifen und dadurch ein Abwickeln des Zwangskabels zu verhindern, und
Mittel (345) zum Lösen der Klinkensperre von dem Getrieberad in Reaktion auf den Passiv-Entriegelungsbefehl oder den Aktiv-Entriegelungsbefehl.

8. Ein System (100;500;600) gemäß einem beliebigen der Ansprüche 1 bis 7; außerdem enthaltend Detektierungsmittel (140;540;640) zum Detektieren des Maximalabstands und des Minimalabstands anhand einer Verlängerung des Verbindungsmittels (125;525) von dem Energieumwandlungsmittel (120;520) aus.

9. Ein System (100;500;600) gemäß einem beliebigen der Ansprüche 1 bis 8, wobei das Verbindungsmittel (125;525) ein Verbindungskabel umfasst, wobei das System außerdem Führungsmittel (410) zum Führen des Verbindungskabels zwischen dem Energieumwandlungsmittel (120;520) und den Segelmitteln (130;530a,530b) umfasst, wobei die Führungsmittel ein erstes Paar von parallelen Laufrollen (415a,415b) und ein quer zu diesem ersten Paar angeordnetes zweites Paar von parallelen Laufrollen (420a,420b) umfassen und wobei das Verbindungskabel durch das erste und durch das zweite Paar der Laufrollen hindurchgeführt ist.

10. Ein System (500;600) gemäß einem beliebigen der Ansprüche 1 bis 9, außerdem enthaltend weitere, mittels des Verbindungsmittels (525) mit dem Energieumwandlungsmittel (520) verbundene Segelmittel (530b) sowie weitere Umstellmittel zum Umstellen des weiteren Segelmittels in Abhängigkeit von dem Maximalabstand und dem Minimalabstand in den passiven Zustand bzw. den aktiven Zustand, wobei jedes der Segelmittel (530a,530b) im aktiven Zustand wechselweise als das Rückführungsmittel für ein anderes, im passiven Zustand befindliches Segelmittel arbeitet.

11. Ein System (500;600) gemäß Anspruch 10, außerdem enthaltend Mittel (640) zum Verzögern des Umstellens jedes im passiven Zustand befindlichen Segelmittels (530a,530b) in den aktiven Zustand in Bezug auf das Umstellen des anderen, im aktiven Zustand befindlichen Segelmittels in den passiven Zustand.

12. Das System (500;600) gemäß Anspruch 10 oder 11, außerdem enthaltend eine Basis (615) zum Installieren des Energieumwandlungsmittels (520) auf dem Boden, wobei diese Basis so gestaltet ist, dass sie um eien senkrecht zum Boden stehende Achse rotieren kann.

13. Ein System (500;600) gemäß einem beliebigen der Ansprüche 1 bis 12, außerdem enthaltend Mittel (310u,310d) zum Rotieren jedes Segelmoduls (230u,230d) um das Verbindungsmittel (125;525) herum, während das Segelmodul fortgetragen wird.

14. Ein Verfahren zum Erzeugen von Energie aus einem Fluidstrom (105), aus der Wiederholung folgender Schritte bestehend:
Umstellen der Segelmittel (130;530a,530b) in einen aktiven Zustand, um durch den Fluidstrom fortgetragen zu werden, und zwar bei Erreichen eines Minimalabstands des Segelmittels von dem Energieumwandlungsmittel (120;520),
Erzeugen der besagten Energie durch das Energieumwandlungsmittel, während das Segelmittel im aktiven Zustand das Verbindungsmittel (125;525), das das Segelmittel mit dem Energieumwandlungsmittel verbindet, von diesem fortträgt,
Umstellen der Segelmittel in einen passiven Zustand zum Minimieren des besagten Forttragens bei Erreichen eines Maximalabstands des Segelmittels von dem Energieumwandlungsmittel, und
Zurückführen des Verbindungsmittels mit dem Segelmittel im passiven Zustand n hin zu dem Energieumwandlungsmittel,
**dadurch gekennzeichnet, dass**
das Segelmittel ein Paar von entlang dem Verbindungsmittel verschiebbaren Segelmodulen (230d,230u) umfasst, wobei jedes Segelmodul einzeln zwischen dem aktiven und dem passiven Zustand umgestellt werden kann, wobei alternativ für die Segelmodule der Schritt des Umstellens der Segelmittel auf einen passiven Zustand Folgendes umfasst:
Entriegeln eines der Segelmodule im aktiven Zustand aus einer korrespondierenden Stehposition (240u,240d) entlang dem Verbindungsmittel und dadurch Bewirken des Verschiebens des vom Fluidstrom fortgetragenen Segelmoduls und des Verschiebens eines der im passiven Zustand verriegelten anderen Segelmodule, und zwar durch das Segelmodul mittels zwischen den Segelmodulen entlang einem entsprechenden Teil des Verbindungsmittels angeordneten Kupplungsmittel,
Stoppen des Verschiebens des Segelmoduls und dadurch Bewirken des Umstellens dieses Moduls in den passiven Zustand,
Verriegeln des gestoppten Segelmoduls in dem passiven Zustand,
Verriegeln des anderen Segelmoduls in der korrespondierenden Stehposition, und
der Schritt des Umschaltens des Segelmittels in einen aktiven Zustand, Folgendes umfassend:
Entriegeln eins der in dem passiven Zustand in der korrespondierenden Stehposition befindlichen Segelmodule aus dem passiven Zustand und dadurch Bewirken des Umstellens dieses Moduls in den aktiven Zustand.

15. Ein Computerprogramm, das Programmanweisungen enthält, die ein Datenverarbeitungssystem (140;540;640) dazu veranlassen, wechselweise jedes der Segelmodule (230d,230u) des einem beliebigen der Ansprüche 1 bis 13 entsprechenden Systems so zu steuern, dass das Segelmodul im aktiven Zustand aus der korrespondierenden Stehposition beim Erreichen des Maximalabstands entriegelt und das im passiven Zustand in der korrespondierenden Stehposition verriegelte Segelmodul aus dem passiven Zustand bei Erreichen des Minimalabstands entriegelt wird.

## Revendications

1. Un système de génération d'énergie (100,500;600) pour générer de l'énergie à partir d'un flux de fluide (105), le système comprenant:
des moyens de conversion d'énergie (120,520);
des moyens à voile (130;530a,530b) commutables entre un état actif pour être transportés par le flux de fluide et un état passif pour minimiser ledit transport,
des moyens de connexion (125;525) connectant les moyens à voile aux moyens de conversion d'énergie pour générer ladite énergie lorsque les moyens à voile dans l'état actif transportent les moyens de connexion loin des moyens de conversion d'énergie,
des moyens de retour (120;530a,530b) pour retourner les moyens de connexion avec les moyens à voile dans l'état passif vers les moyens de conversion d'énergie, et
des moyens de commutation pour commuter les moyens à voile à l'état passif et à l'état actif en réponse à une distance maximum et à une distance minimum, respectivement, des moyens à voiles depuis les moyens de conversion d'énergie,
**caractérisé en ce que**
les moyens à voiles comprennent une paire de modules à voile (230u,230d) pouvant glisser le long des moyens de connexion, chaque module à voile étant commutable individuellement entre l'état actif et l'état passif, et dans lequel les moyens de commutation comprennent:
des moyens d'arrêt (135,535a,535b) pour chaque module à voile, les moyens d'arrêt étant adaptés à arrêter le glissement du module à voile correspondant lorsque transporté dans l'état actif ainsi provoquent la commutation de celui à l'état passif,
des moyens de blocage passif (310u,310d,325) pour chaque module à voile, les moyens de blocage passif étant adaptés à bloquer dans l'état passif le module à voile arrêté correspondant,
des moyens d'accouplement (245) disposés entre les modules à voile le long d'une portion correspondante des moyens de connexion pour glisser chaque module à voile bloqué dans l'état passif en opposition du flux de fluide à une position de stationnement (240u,240d) le long des moyens de connexion par le glissement de l'autre module à voile lorsque transporté dans l'état actif,
des moyens de blocage active (240u,240d,325) pour chaque module à voile, les moyens de blocage active étant adaptés à bloquer dans la position de stationnement le module à voile correspondant, et
des moyens de control (140;540;64) pour contrôler chacun des modules à voile (230d,230u) alternativement à débloquer de la position de stationnement correspondante le module à voile dans l'état actif en réponse à la distance maximum ainsi provoquant le glissement du module à voile étant transporté par le flux de fluide, et à débloquer de l'état passif le module à voile étant bloqué dans l'état passif dans la position de stationnement correspondante en réponse à la distance minimum ainsi provoquent la commutation de celui à l'état actif.

2. Le système (100,500;600) selon la revendication 1, dans lequel chaque module à voile (230u,230d) comprend une voile (305u,305d) avec un trou apical (310u,310d) pouvant glisser le long des moyens de connexion (125;525), un collecteur (320u,320d) pouvant glisser le long des moyens de connexion, et des lignes de suspension (315u,315d) entre le voile et le collecteur, les moyens de blocage passif correspondant (310u,310d,325) comprenant des moyens (325) pour bloquer le collecteur au trou apical et les moyens de blocage actif correspondants (240u,240d,325) comprenant des moyens (325) pour bloquer le collecteur dans la position de stationnement.

3. Le système (100,500;600) selon la revendication 1 ou 2, comprenant en outre des moyens de support (135;535a,535b) pour auto-mouvoir les moyens à voile (130;530a,530b) loin des moyens de conversion d'énergie (120;520) transversalement au flux de fluide (105).

4. Le système (100,500;600) selon la revendication 3, dans lequel les moyens de support (135;535a,535b) comprennent un module de support (235u,235d) étant fixé aux moyens de connexion pour chaque module à voile (230u,230d), le module de support définissant les moyens d'arrêt correspondants.

5. Le système (100,500;600) selon la revendication 4, dans lequel le flux de fluide est le vent (105), chaque module de support (235u,235d) comprenant un ballon aérostatique.

6. Le système (100,500;600) selon une quelconque des revendications de 1 à 5, dans lequel chaque moyen de blocage passif (310u,310d,325) comprend:
des moyens d'auto-blocage passif (330-340) pour auto-bloquer le module à voile (130;530a,530b) dans l'état passif lorsque le module à voile atteint les moyens d'arrêt (135;535a,535b), et
des moyens de déblocage passif (345) pour débloquer de l'état passif le module à voile en réponse à une commande de déblocage passif,
et dans lequel chacun des moyens de blocage actif (240u,240d,325) comprend:
des moyens d'auto-blocage actif (330-340) pour auto-bloquer le module à voile dans la position de stationnement (240u,240d) lorsque le module à voile atteint la position de stationnement, et
des moyens de déblocage actif (345) pour débloquer le module à voile de la position de stationnement en réponse à une commande de déblocage actif.

7. Le système (100,500;600) selon la revendication 6, lorsqu'elle dépend directement ou indirectement de la revendication 2, dans lequel chacun des moyens de blocage passif (310u,310d,325) et des moyens de blocage actif (240u,240d,325) comprennent:
une roue dentée (330) étant montée sur la voile (305u,305d) en correspondance du trou apical (310u,310d) ou sur les moyens de connexion (125;525) à la position de stationnement (240u,240d), respectivement,
un câble de contrainte (335) s'étendant entre le collecteur (320) et la roue dentée, la roue dentée étant sollicitée à enrouler le câble de contrainte autour de la roue dentée,
un cliquet (340) étant monté sur la voile en correspondance du trou apical ou sur les moyens de connexion à la position de stationnement, respectivement, le cliquet étant sollicité pour engager la roue dentée ainsi empêchant un déroulement du câble de contrainte, et
des moyens (345) pour désengager le cliquet de la roue dentée en réponse à la commande de déblocage passif ou à la commande de déblocage actif, respectivement.

8. Le système (100,500;600) selon une quelconque des revendications de 1 à 7, comprenant en outre des moyens de détection (140;540;640) pour détecter la distance maximum et la distance minimum selon une extension des moyens de connexion (125;525) des moyens de conversion d'énergie (120;520).

9. Le système (100,500;600) selon une quelconque des revendications de 1 à 8, dans lequel les moyens de connexion (125;525) comprennent un câble de connexion, le système comprenant en outre des moyens de conduction (410) pour conduire le câble de connexion entre les moyens de conversion d'énergie (120,520) et les moyens à voile (130;530a,530b), dans lequel les moyens de conduction comprennent une première paire de rouleaux fous parallèles (415a,415b) et une seconde paire de rouleaux fous parallèles (420a,420b) étant disposée transversalement à la première paire de rouleaux fous, le câble de connexion passant à travers la première paire de rouleaux fous et la seconde paire de rouleaux fous.

10. Le système (500;600) selon une quelconque des revendications de 1 à 9, comprenant en outre des moyens à voile supplémentaires (530b) étant connectés aux moyens de conversion d'énergie (520) par les moyens de connexion (525), et des moyens de commutation supplémentaires pour commuter les moyens à voile supplémentaires dans l'état passif et dans l'état actif en réponse à la distance maximum et à la distance minimum, respectivement, chacun des moyens à voile (530a,530b) dans l'état actif fonctionnant alternativement comme les moyens de retour pour un autre des moyens à voile dans l'état passif.

11. Le système (500;600) selon la revendication 10, comprenant en outre des moyens (640) pour retarder la commutation à l'état actif de chacun des moyens à voile (530a,530b) dans l'état passif par rapport à la commutation dans l'état passif de l'autre moyen à voile dans l'état actif.

12. Le système (500;600) selon la revendication 10 ou 11, comprenant en outre une base (615) pour installer les moyens de conversion d'énergie (520) au sol, la base étant adaptée à tourner autour d'un axe de rotation perpendiculaire au sol.

13. Le système (500;600) selon une quelconque des revendications de 1 à 12, comprenant en outre des moyens (310u,310d) pour faire tourner chaque module à voile (230u,230d) autour des moyens de connexion (125;525) lorsque le module à voile est transporté.

14. Une méthode pour générer de l'énergie à partir d'un flux de fluide (105), la méthode comprenant la répétition des étapes:
commuter des moyens à voile (130;530a,530b) à un état actif pour être transportés par le flux de fluide en réponse à une distance minimum des moyens à voile des moyens de conversion d'énergie,
générer ladite énergie par les moyens de conversion d'énergie lorsque les moyens à voile dans l'état actif transportent des moyens de connexion (125 ;525) connectant les moyens à voile aux moyens de conversion d'énergie loin de ceux-ci,
commuter les moyens à voile à un état passif pour minimiser ledit transport en réponse à une distance maximum des moyens à voile des moyens de conversion d'énergie, et
retourner les moyens de connexion avec les moyens à voile dans l'état passif vers les moyens de conversion d'énergie,
**caractérisé en ce que**
les moyens à voiles comprenant une paire de modules à voile (230u,230d) pouvant glisser le long des moyens de connexion, chaque module à voile étant commutable individuellement entre l'état actif et l'état passif, dans lequel pour les modules à voile l'étape de commuter les moyens à voile à un état passif alternativement comprend:
débloquer, d'une position de stationnement correspondante (240u,240d) le long des moyens de connexion, un des modules à voile dans l'état actif ainsi provoquant le glissement du module à voile étant transporté par le flux de fluide et le glissement de l'autre module à voile bloqué dans l'état passif en opposition du flux de fluide dans la position de stationnement correspondante par le module à voile à travers des moyens d'accouplement (245) disposés entre les modules à voile le long d'une portion correspondante des moyens de connexion,
arrêter le glissement du module à voile ainsi provoquant la commutation de celui à l'état passif,
bloquer dans l'état passif le module à voile arrêté,
bloquer dans la position de stationnement l'autre module à voile, et
l'étape de commuter des moyens à voile à un état actif comprenant:
débloquer, de l'état passif, un des modules à voile étant bloqué dans l'état passif dans la position de stationnement correspondante ainsi provoquent la commutation de celui à l'état actif.

15. Un programme d'ordinateur comprenant des moyens à code pour provoquer un système de traitement de données (140;540;640) à contrôler chacun des modules à voile (230d,230u) du système selon une quelconque des revendications de 1 à 13 alternativement à débloquer de la position de stationnement correspondante le module à voile dans l'état actif en réponse à la distance maximum et à débloquer de l'état passif le module à voile étant bloqué dans l'état passif dans la position de stationnement correspondante en réponse à la distance minimum.
